# EUROPEAN PATENT SPECIFICATION

(11) **EP 2 701 069 B1**
(45) Date of publication and mention of the grant of the patent: **19.02.2020**
(21) Application number: 12773923.3
(22) Date of filing: 16.04.2012
(51) Int. Cl.: G06F 13/00, H04L 29/12, H04L 12/24, G06F 13/38, G06F 9/445

(54) **PORT NUMBER IDENTIFICATION SYSTEM, PORT NUMBER IDENTIFICATION SYSTEM CONTROL METHOD, AND CONTROL PROGRAM THEREOF**
ANSCHLUSSNUMMERN-IDENTIFIKATIONSSYSTEM, VERFAHREN ZUR STEUERUNG DES ANSCHLUSSNUMMERN-IDENTIFIKATIONSSYSTEMS UND STEUERPROGRAMM DAFÜR
SYSTÈME D'IDENTIFICATION DE NUMÉRO DE PORT, PROCÉDÉ DE COMMANDE DE SYSTÈME D'IDENTIFICATION DE NUMÉRO DE PORT ET PROGRAMME DE COMMANDE ASSOCIÉ

(30) Priority: 22.04.2011 JP 2011095780
(43) Date of publication of application: 26.02.2014
(73) Proprietor: NEC Corporation, Tokyo 108-8001 (JP)
(72) Inventor: UCHIMURA Yusuke, Tokyo 108-8001 (JP)
(74) Representative: Vossius & Partner Patentanwälte Rechtsanwälte mbB
(86) International application number: PCT/JP2012/060277
(87) International publication number: WO 2012/144462

(56) References cited:
- WO-A1-2009/029636
- JP-A- 2006 166 062
- JP-A- 2007 179 357
- SMEREKA R: "A TCP/IP SOCKET LOCATION SERVER", C/C++ USERS JOURNAL, R&D PUBLICATIONS, LAWRENCE, KS, US, vol. 18, no. 9, 1 September 2000 (2000-09-01), pages 34,36,38-40,42, XP000978168, ISSN: 1075-2838
- COTTON ICANN L EGGERT NOKIA J TOUCH USC/ISI M WESTERLUND ERICSSON S CHESHIRE APPLE M: "Internet Assigned Numbers Authority (IANA) Procedures for the Management of the Service Name and Transport Protocol Port Number Registry; draft-ietf-tsvwg-iana-ports-10.txt", INTERNET ASSIGNED NUMBERS AUTHORITY (IANA) PROCEDURES FOR THE MANAGEMENT OF THE SERVICE NAME AND TRANSPORT PROTOCOL PORT NUMBER REGISTRY; DRAFT-IETF-TSVWG-IANA-PORTS-10.TXT, INTERNET ENGINEERING TASK FORCE, IETF; STANDARDWORKINGDRAFT, INTERNET SOCIET, no. 10, 12 February 2011 (2011-02-12), pages 1-32, XP015073930, [retrieved on 2011-02-12]

## Description

### TECHNICAL FIELD

The present invention relates to a port number identification system and, more specifically, to a port number identification system which acquires and identifies the port number of a communication port used when an administrated machine communicates with an administration server via a well-known port.

### BACKGROUND ART

Regarding servers for operating business services or business terminals (PC: Personal Computers), the number of steps required for construction of a system (OS: Operating System) is increased as the number thereof to be installed is increased. Thus, deployment of a system is employed.

The deployment system mentioned above is a system which acquires a disk image of an already set-up OS, and executes automatic set-up of the OS by collectively distributing it to a plurality of servers or business terminals.

In general, such system is constituted with an administration server which distributes the disk image, and an administrated machine which executes set-up of an OS by using the disk image distributed from the administration server.

Recently, due to the spread of virtualization, a virtual OS has come to be in a structure that does not depend on the physical environments. Therefore, there are more and more cases where the virtual OS is utilized for other systems. With the deployment system, the disk image is also being utilized to other systems recently.

As specifically known content of the technical field described above for that, there are Patent Documents 1 to 3.

The technique disclosed in Patent Document 1 describes about a connection-oriented network automatic setting system with which changes in the setting of the system are automatically reflected, and described about a method for setting network information automatically by communication done between an automatic setting server and a client.

Further, the technique disclosed in Patent Document 2 is a technique with which a resource administration server can allot hardware resources for administrated machines when the administrated machines use the hardware resources under an environment where the hardware resources (magnetic tape, hard disk driver, and the like), the administrated machines that use the hardware resources, and the resource administration server that allots the hardware resources to the administrated machines are connected to a same network.

Further, the technique disclosed in Patent Document 3 is a technique which distributes the load of a gateway to a partner processor to reduce the load of the gateway and , further, makes it possible to handle parallel and distributed systems connected to an inside network as a single system.
Patent Document 1: Japanese Unexamined Patent Publication Hei 10-98480
Patent Document 2: Japanese Unexamined Patent Publication Hei 5-100984
Patent Document 3: Japanese Unexamined Patent Publication Hei 9-204376

However, the deployment system normally stores agent programs within an already set-up OS and creates a disk image for each of the agent programs, so that the port numbers used in the communication between the administration server and the administrated machines are acquired in fixed values. Thus, when the disk image is transferred to another system that has a different port number, the administrated machine has no way to know the port number of the administration server and fails to establish the communication. This issue occurs since the conventional methods hold the information of the port numbers with fixed numbers in a registry.

The technique disclosed in Patent Document 1 cannot be utilized in another system having different port number. Therefore, there is required a method which automatically changes the setting of the port number without requiring the user to manually reset the port number even in a case where the port number is changed as in the case where the disk image is transferred to another system having different port number.

Further, the techniques disclosed in Patent Document 2 and Patent Document 3 are not capable of acquiring the port number dynamically when transferred to another system having a different port number. WO 2009/029636 A1 discloses a system, in which a client can acquire a port number file from a file server using a shared directory.

SMEREKA R: "A TCP/IP SOCKET LOCATION SERVER", C/C++ USERS JOURNAL, R&D PUBLICATIONS, vol. 18, no. 9, 1 September 2000, XP000978168 discloses a system in which a client can acquire a configuration file containing port numbers, which can be used to communicate with a server.

The object of the present invention is to improve the inconveniences of the above-described related techniques and to provide a port number identification system which can easily identify the port number of the administration server side from the administrated machine in a case where the port number of the communication port of the administration server side is changed and the connection-destination port number cannot be identified.

### DISCLOSURE OF THE INVENTION

The above object is achieved with the features of the claims.

Acccording to the present invention, it is so structured that the administration server takes out the port number file from the administration server side storage module and transmits it to the administrated machine via the exclusive port in response to a request for the port number file made from the port number identification module of the administrated machine side via the exclusive port. Therefore, it is possible to provide the excellent port number identification system, port number identification system control method, and port number identification system control program, with which the port number identification module of the administrated machine side can automatically identify the port number of the administration server based on the port number file transmitted via the exclusive port.

### BRIEF DESCRIPTION OF THE DRAWINGS

FIG. 1 is a block diagram showing an embodiment of a port number identification system according to the present invention;
FIG. 2 is an illustration showing a logical structure of an administration server 10 disclosed in FIG. 1;
FIG. 3 is an illustration showing a logical structure of an administrated machine 30 disclosed in FIG. 1;
IG. 4 is an illustration showing a logical structure of a port number file 11a disclosed in FIG. 2;
FIG. 5 is a block diagram showing details of the content of a system A of the administration server 10 of the port number identification system disclosed in FIG. 1;
FIG. 6 is a block diagram showing details of the content of a system B of the administration server 10 of the port number identification system disclosed in FIG. 5;
FIG. 7 is a block diagram showing details of the content of the administration server 10 in a case where the port number of the port number identification system disclosed in FIG. 1 is dynamically changed;
FIG. 8 is a block diagram showing details of the content of the administrated machine 30 of the system A of the port number identification system disclosed in FIG. 1;
FIG. 9 is a block diagram showing details of the content of the system B of the administrated machine 30 disclosed in FIG. 8;
FIG. 10 is a flowchart showing actions of the administrated machine 30 disclosed in FIG. 1;
FIG. 11 is shows actions of a case where the port number of the administrated machine 30 disclosed in FIG. 1 is dynamically changed;
FIGS. 12A and 12B show charts of example of set values of the port number identification system, in which 12A shows examples of the set values of the system A and 12B shows the set values of the system B;
FIGS. 13A and 13B show charts illustrating the state where the set values of FIG. 9B are rewritten by a port number setting module 31b, in which 13A shows the state where the set values of the system A are set and 13B shows the state where the port number setting module 31b rewrites the port numbers;
FIGS. 14A and 14B show charts of examples of set values of the port number identification system, in which 14A shows examples of the initial values and 14B shows a case where the port number of the administration server 10 is changed; and
FIG. 15 is a chart showing the state where the set values of FIG. 14B are rewritten by the port number setting module 31b.

### BEST MODES FOR CARRYING OUT THE INVENTION

### (EMBODIMENT)

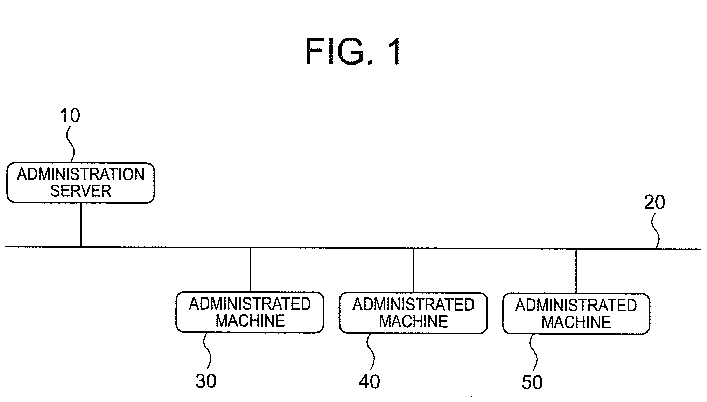

Hereinafter, an embodiment of the port number identification system according to the present invention will be described by referring to FIG. 1 to FIG. 5.

First, as shown in FIG. 1, the port number identification system of the embodiment includes: an administration server 10 which administers and controls an administrated machine 30 via an administration network 20; the administration network 20 as a network infrastructure that is connected to the administration server 10 and the administrated machine 30; and the administrated machines 30 to 50 which are administered and controlled by the administration server 10 via the administration network 20.

FIG. 1 shows an example for schematically describing the embodiment, which is not intended to limit the system structure thereto. That is, the administrated machines 30 to 50 can be set in an arbitrary number according to the system by which those are administered and controlled. In the embodiment, out of the administrated machines 30 to 50, processing actions between the administrated machine 30 and the administration server 10 will be described.

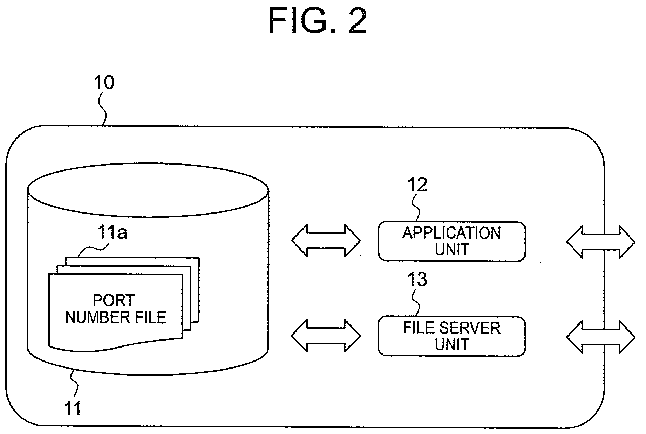

The logical structure of the above-described administration server 10 can be schematically illustrated as in FIG. 2. As shown in FIG. 2, the administration server 10 includes: an application unit 12 which is connected to the administrated machine 30 and deploys the system; an administration server side storage module 11 which stores a port number file 11a in which the port number of the administration server 10 is recorded; and a file server unit 13 which transmits the port number file 11a to the outside via the administration network 20.

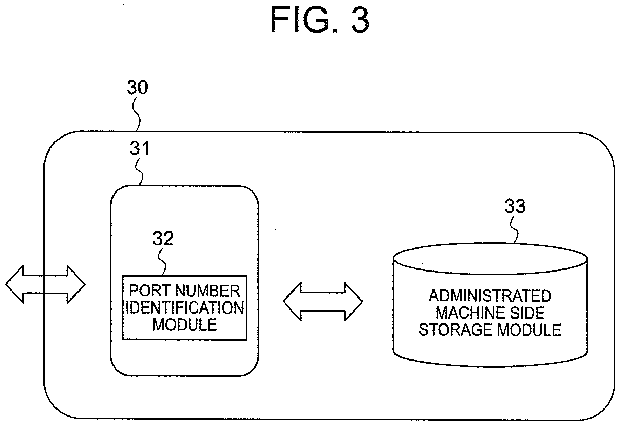

In the meantime, the logical structure of the above-described administrated machine 30 can be schematically illustrated as in FIG. 3. As shown in FIG. 3, the administrated machine 30 includes: an application unit 31 connected to the administration server 10, to which the system is deployed; and an administrated machine side storage module 33 which stores a file having the same content as that of the above-described port number file 11a.

Note here that "deploy" mentioned above means to set the system to be usable via the network. The administration server 10 connects to the administrated machine 30 via the network 20, and deploys the system to the administrated machine 30 to make the administrated machine 30 useable.

The above-described application unit 31 includes a port number identification module 32 which acquires the port number file 11a from the administration server 10, stores it to the administrated machine side storage module 33, and identifies the port number of the administration server 10 based on the content of the port number file 11a.

Thereby, the application unit 31 can set the port number of the administration server 10 identified by the port number identification module 32 as the connection destination, and communicate with the administration server 10.

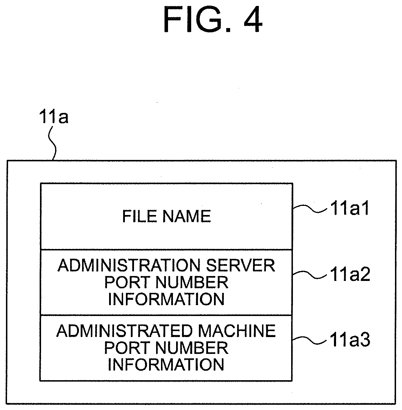

As shown in FIG. 4, the above-described port number file 11a contains, as the port number file information: a file name 11a1 that is the name given to the port number file 11a; an administration server port number information 11a2 that is the information of the port number used when the application unit 12 of the administration server 10 communicates with the administrated machine 30; and an administrated machine port number information 11a3 that is the information of the port number used when the administrated machine 30 communicates with the administration server 10.

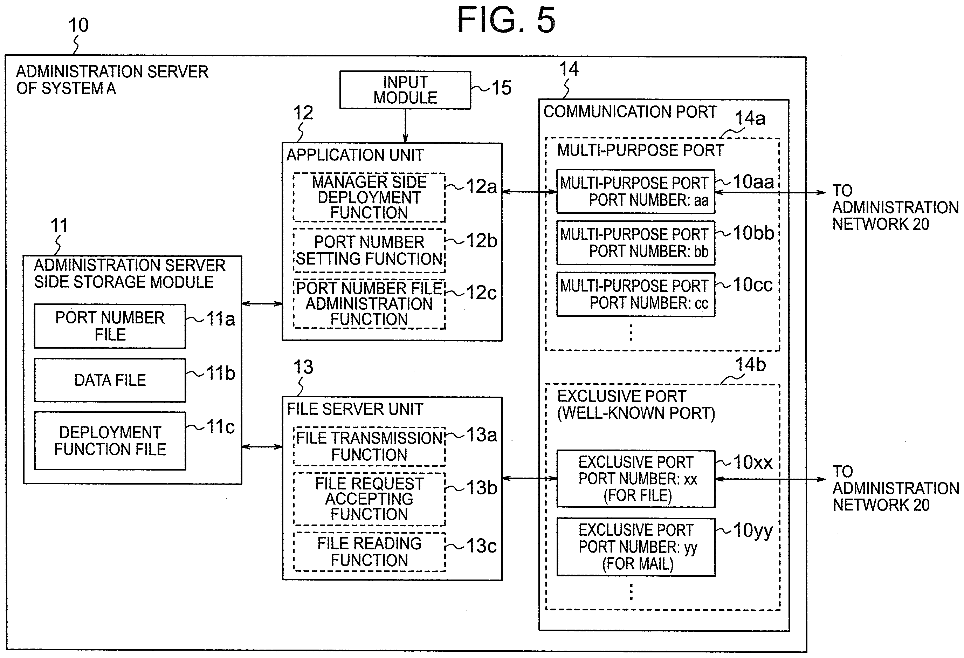

The above-described content of the administration server 10 will be described in more details by referring to FIG. 5.

The administration server 10 includes a communication port 14 that is a connection port provided between itself and the administration network 20. The communication port 14 has a multi-purpose port 14a and an exclusive port (well-known port) 14b.

The above-described multi-purpose port 14a is constituted with a plurality of communication ports (multi-purpose ports) having different port numbers with no limit set in the use purpose. The application unit 12 has a function which performs communication by using the port of the port number designated in advance among the plurality of communication ports.

Further, the above-described well-known port 14b is constituted with communication ports having different port numbers with use purpose being designated in advance for each port number. Regarding the well-known port 14b, the exclusive port 10xx whose port number is xx as shown in FIG. 5 is an exclusive port used for transmitting and receiving the file.

Note here that the above-described application unit 12 includes a manager side deployment function 12a which achieves a deployment function by communicating with an agent side deployment function 31a of the administrated machine 30 to be described later.

The above-described application unit 12 includes: a manager side deployment function 12a which communicates with the application unit 31 of the administrated machine 30 via the communication port 14a and performs deployment; a port number setting function 12b which sets the port number to be used based on the port number file 11a; and a port number file administration function 12c which generates, changes, and deletes the port number file 11a based on the information inputted from outside via an input module 15 provided in advance to the administration server 10.

Thereby, when the user operates the application unit 12 via the input module 15, the port number file administration function 12c can change the content of the port number file 11a and reflect the change content to the application unit 12.

The above-described file server 13 includes: a port number file request accepting function 13a which accepts a request of the port number file 11a via the well-known port 14b; a port number file reading function 13c which reads the port number file 11a based on the request accepted by the port number file request accepting function 13b; and a port number file transmission function 13a which transmits the content read by the port number file reading function 13c to the administrated machine 30 via the well-known port 14b.

Thereby, the port number file request accepting function 13b accepts the request for the port number file from outside, and the port number file reading function 13c upon receiving the request can read the port number file 11a.

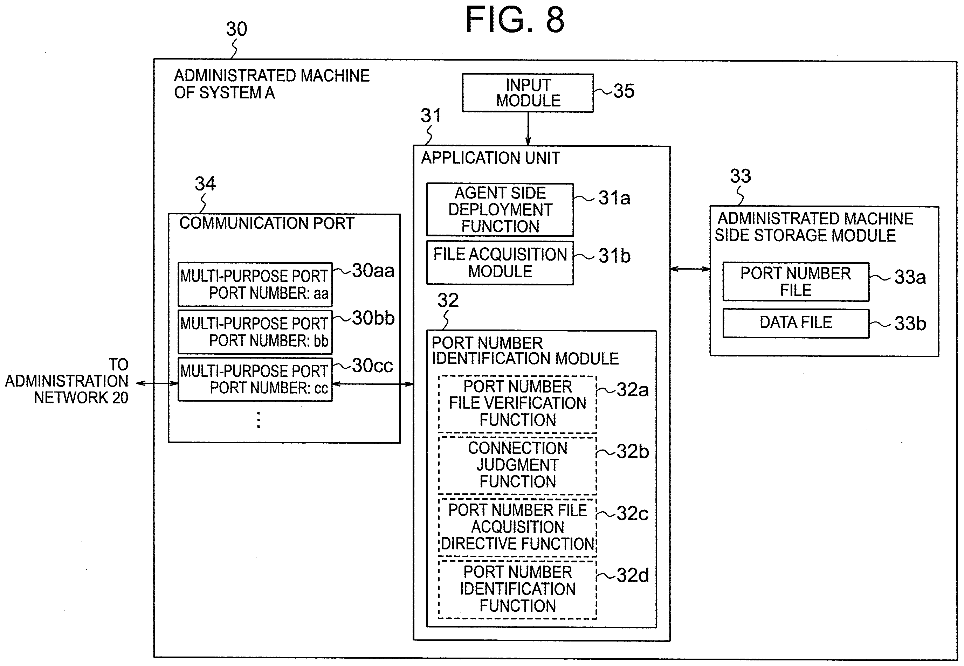

The content of the administrated machine 30 described above will be described in more details by referring to FIG. 8.

The administrated machine 30 includes a communication port as a connection port 34 between itself and the administration network 20. The communication port 34 constituted with a plurality of communication ports (multi-purpose ports) having different port numbers. The application unit 31 has a function which performs communication by using the port of the port number designated in advance among the plurality of communication ports.

The above-described application unit 31 includes the agent side deployment function 31a which achieves a deployment function by communicating with the manager side deployment function 12a of the administration server 10.

The application unit 31 includes the port number identification module 32, and the port number identification module 32 includes a port number file verification function 32a which verifies whether or not a port number file 33a is stored in the administrated machine side port number file storage module 33.

Further, the application unit 31 includes a file acquisition module 31b, and the file acquisition module 31b has a function which communicates with the file server unit 13 via the well-known port 14b of the administration server 10 via the exclusive port 10xx, requests a file designated from the administration server side storage module 11, and stores the acquired file to the administrated machine side storage module 33.

Thereby, even when the port number of the administration server 10 is unknown, the file acquisition module 31b can connect to the administration server 10 via the exclusive port 10xx that is the well-known port used for transmitting and receiving the file, acquire the file stored in the administration server side storage module 11, and store it to the administrated machine side storage module 33.

The above-described port number identification module 32 includes a port number file acquisition directive function 32c which directs the file acquisition module 31b to acquire the port number file 11a in a case where the port number file 33a is not stored and in a case where the communication fails.

Thereby, the port number file acquisition directive function 32c can direct to the file acquisition module 31b to acquire the port number file 11a, and the file acquisition module 31b can acquire the port number file 11a from the administration server 10 and store it to the administrated machine side storage module 33.

Further, the port number identification module 32 includes a port number identification function 32d which identifies the port number of the administration server 10 that is the connection destination of the application unit 31 based on the port number of the administration server 10 recorded on the port number file 33a that is stored in the administrated machine side storage module 33.

Thereby, the port number file verification function 32a can verify whether or not there is the port number file 33a in the administrated machine side storage module 33; the connection judgment function 32b can judge whether or not it is possible to connect to the port number recorded on the port number file 33a when there is the port number file 33a; the port number file acquisition directive function 32c can direct the file acquisition module 31b to acquire the port number file 11a when judged that it is not possible to connect and when there is a communication error; the file acquisition module 31b upon receiving the directive can request the port number file 11a to the administration server 10 via the well-known port, generate the file of the same content as that of the port number file 11a transmitted from the administration server 10 according to the request as the port number file 33a, and store the port number file 33a to the administrated machine side storage module 33; the port number identification function 32d can identify the port number of the administration server based on the port number file 33a stored in the administrated machine side storage module 33; and the application unit 31 can set the identified port number as the connection destination port number of the administration server 10.

Thereby, the agent side deployment function 31a can deploy the system by communicating with the manager side deployment function 12a via the communication port identified by the port number identification function 32d.

Further, when the port number identification module 32 directs the file acquisition module 31b to acquire the port number file 11a from the administration server 10 and identifies the port number to be used for having communication with the administration server 10 based on the content of the port number file 11a acquired according to the directive, the port number can be identified easily even when the port number of the administration server 10 is changed.

### (Actions of Embodiment)

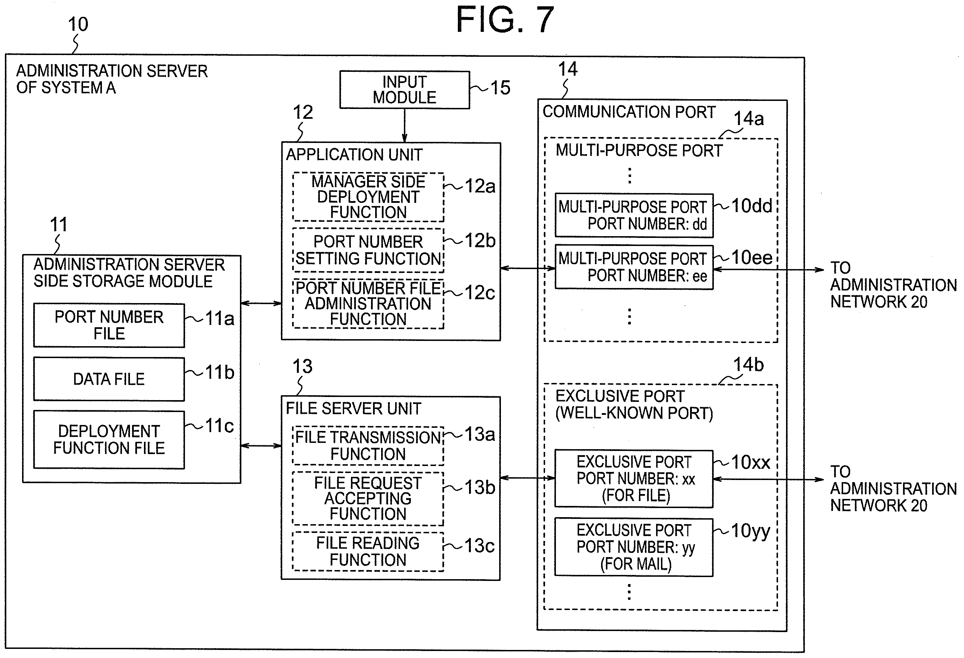

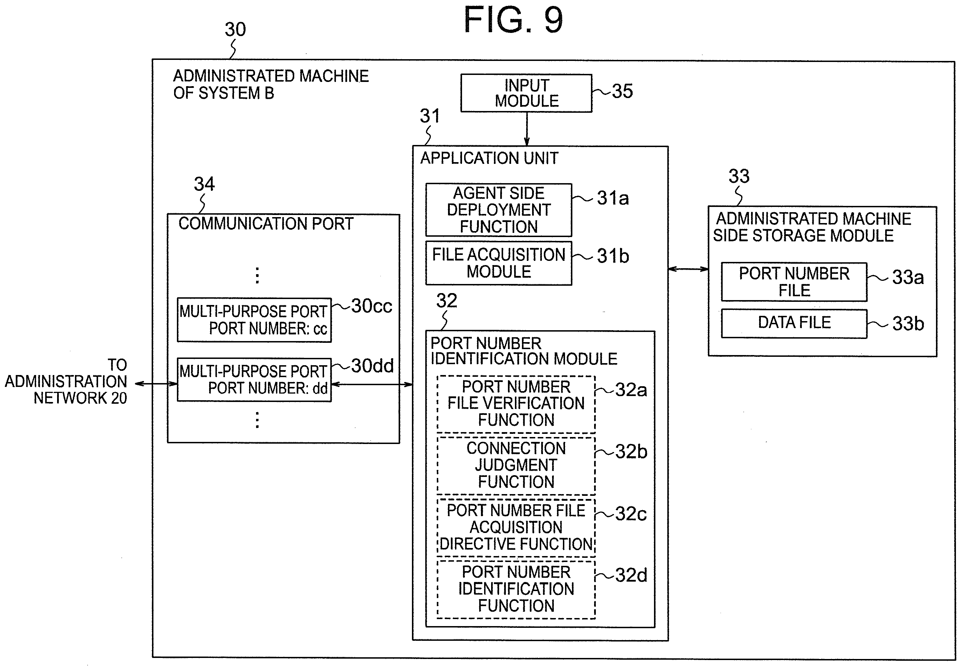

Next, overall actions of the port number identification system will be described by referring to FIG. 5 to FIG. 15.

First, described are the actions executed when the port number file 33a does not exist in the administrated machine side storage module 33, e.g., immediately after the application unit 31 is installed to the administrated machine 30.

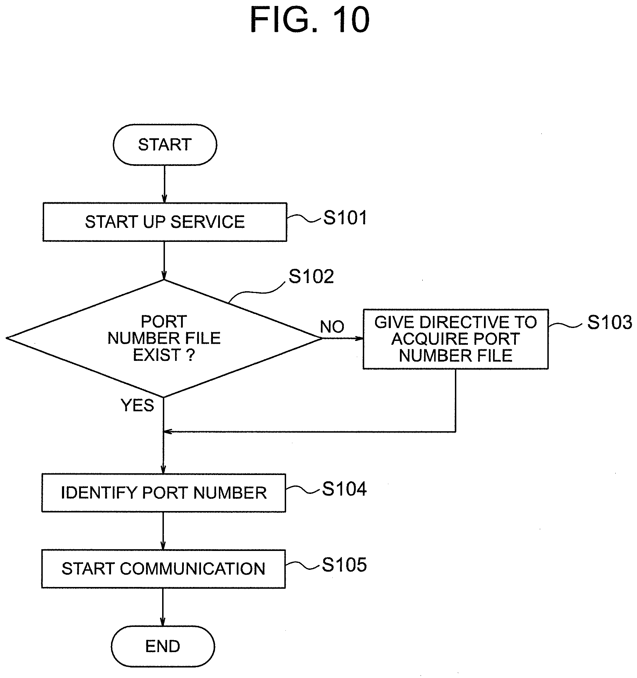

When it is directed to start the application unit 31 of the administrated machine 30 by starting up the OS or the like (FIG. 10: step S101/ a service starting step), the port number file verification function 32a of the port number identification module 32 verifies whether or not the port number file 33a is stored in the administrated machine side storage module 33 (FIG. 10: step S102/ a set file verification step).

When the port number file verification function 32a verifies that the port number file 33a is not stored in the administrated machine side storage module 33 (FIG. 10: Yes in step S102), the port number file acquisition directive function 32c directs the file acquisition module 31b to acquire the port number file 11a, the file acquisition module 31b upon receiving the command communicates with the file server unit 13 via the well-known port, acquires the content of the port number file 11a stored in the port number file storage module 11, generates a file of the same content as that of the acquired port number file 11a as the port number file 33a, and stores it to the administrated machine side storage module 33 (FIG. 10: step S103/ a port number file acquisition step).

Thereafter, the port number file identification function 32d identifies the connection destination port number based on the port number information of the administration server 10 on the port number file 33a stored in the administrated machine side storage module 33 (FIG. 10: step S104/ a port number identification step).

Thereby, the communication port designated by the administration server 10 is set as the connection destination of the application unit 31, and the agent side deployment function 31a communicates with the administration server 10 (FIG. 10: step S105/ a communication starting step). This makes it possible to achieve the deployment function.

Next, actions of a case where the port number file 33a exists in the administrated machine side storage function 33 will be described. This case is not an embodiment of the present invention, but merely background knowledge useful for understanding the present invention.

When it is directed to start the application unit 31 of the administrated machine 30 by starting up the OS or the like (FIG. 10: step S101/ the service starting step), the port number file verification function 32a of the port number identification module 32 verifies whether or not the port number file 33a is stored in the administrated machine side module 33 (FIG. 10: step S102/the set file verification step).

When the port number file verification function 32a verifies that the port number file 33a is stored in the administrated machine side storage module 33, the port number identification function 32d sets the connection destination of the application unit 31 based on the port number of the administration server 10 recorded on the port number file 33a (FIG. 10: step S104/ the port number setting step), and the agent side deployment function 31a communicates with the administration server 10 via the communication port 14a (FIG. 10: step S105/ the communication starting step).

Next, described are actions executed in a case where communication fails because there is no way of knowing the port number of the communication partner, e.g., when the disk image is brought to another system of a different port number.

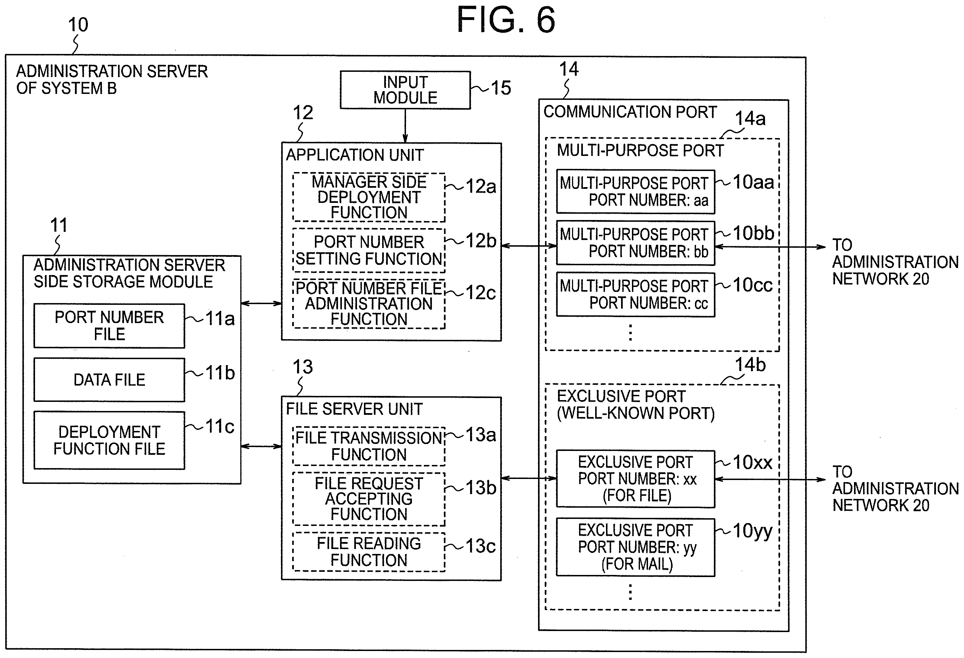

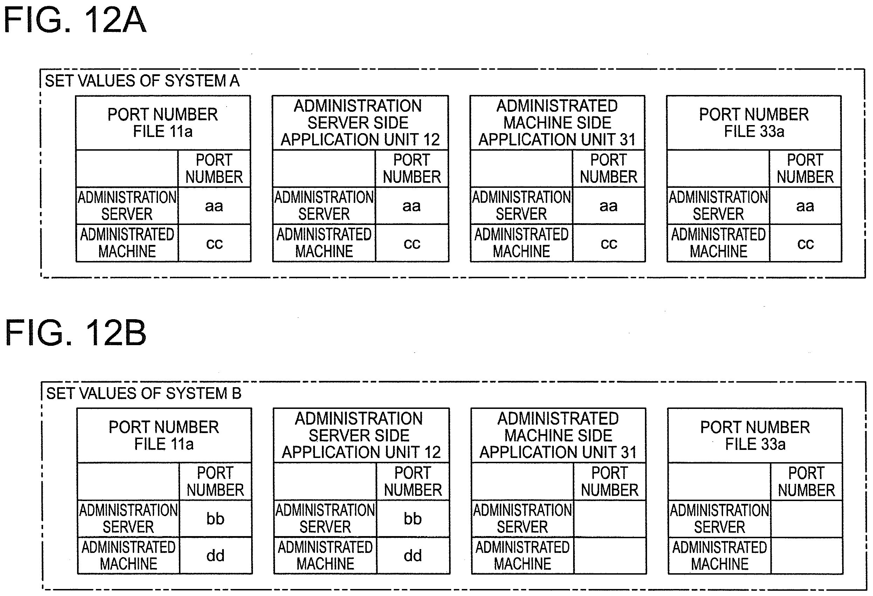

As an example, assumed is a case where the disk image captured in the system A as shown in FIG. 5 and FIG. 8 are brought to the system B as shown in FIG. 6 and FIG. 8 and automatic setup of an OS is executed. As shown in FIG, 12A and FIG. 12B, the port number of an application of the administration server of the system A is defined as aa, the port number of an application of the administration server of the system B is defined bb, the port number of an application of the administrated machine of the system A is defined as cc, and the port number of an application of the administrated machine of the system B is defined as dd.

When the disk image is acquired in the system A, as the port number information, the port number of the application of the administration server is captured as aa and the port number of the application of the administrated machine is captured as cc with the fixed values. At this time, the port number file 33a stored in the administrated machine side storage module 33 of the administrated machine 30 is also captured simultaneously. In the port number file 33a, aa is written as the administration server port number information, and cc is written as the administrated machine port number information.

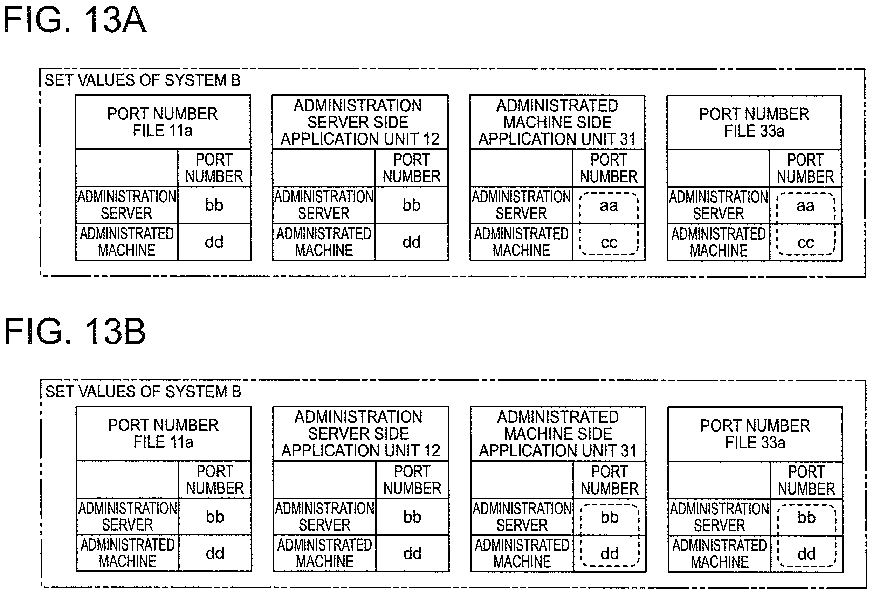

When the disk image captured in the system A is brought to the system B and the automatic setup of the OS is executed, as shown in FIG. 13A, the OS is automatically set up as aa for the port number of the application unit 12 of the administration server 10 side and as cc for the port number of the application unit 31 of the administrated machine 30 side.

Next, when it is directed to start the application unit 31 of the administrated machine 30 by starting up the OS, the port number identification module 32 sets the port number based on the information of the port number file 33a through the procedure described above.

Here, the administration server port number is set as aa and the administrated machine port number information is set as cc in the port number file 33a. Thereafter, the application unit 31 tries to communicate with the application unit 12 of the administration server 10 of the system B for reflecting the individuality. However, the port number of the application of the administration server 10 of the system B is bb which is a different port number, so that the communication fails.

When the communication fails, the port number identification module 32 directs the file acquisition module 31b to acquire the port number file 11a. The file acquisition module 31b upon receiving it communicates with the file server of the administration server 10 of the system B by using the well-known port 14b, acquires the content of the port number file 11a stored in the administration server side storage module 11, generates a file of the content same as the acquired content as the port number file 33a, and stores it to the administrated machine side storage module 33.

Here, in the port number file 33a described above, bb is written as the port number information of the administration server 10 and dd is written as the port number information of the administrated machine 30 as shown in FIG. 13B.

Subsequently, the port number identification module 32 sets the port number of the administration server 10 based on the content of the port number file 33a, and the agent side deployment function 31a achieves the deployment function by communicating with the administration server 10 by having the communication port 14a of the port number set by the file acquisition module 31b as the connection destination.

It is assumed here that some kind of method is used as a method for acquiring the IP address of the administration server 10. As an example of the acquiring method, the user inputs the broadcast and the IP address designating the DHCP, for example.

Next, described are actions executed when communication fails due to changes in the setting of the port number and the like even when the port number file 33a exists in the administrated machine side storage module 33. As an example, assumed is a case where the port number of the administrated server within the system A is changed.

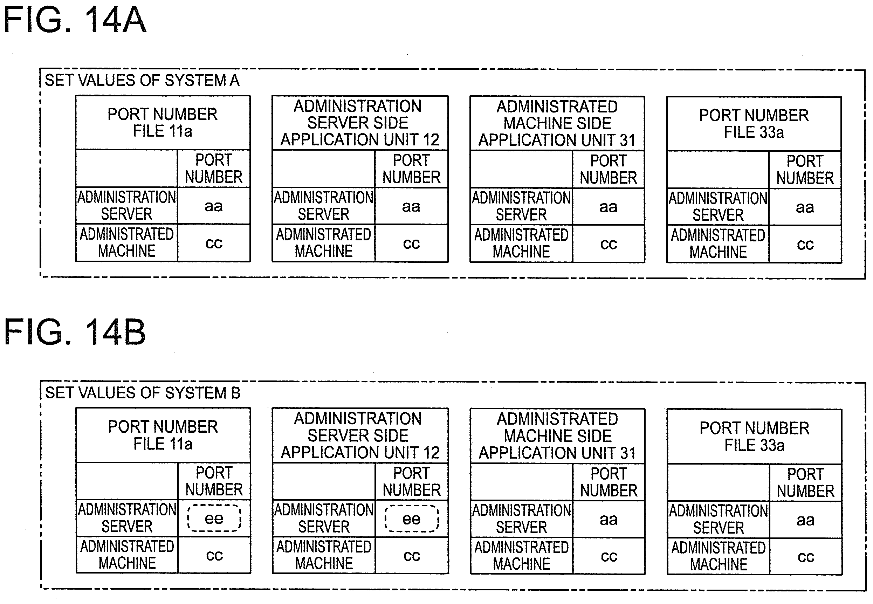

First, as shown in FIG. 14A, as the initial values of the port numbers, aa is set as the port number of the application of the administration server of the system A, and cc is set as the port number of the application of the administrated machine of the system A. Further, it is assumed that the port number file 11a is stored in the administrated machine of the system A.

In the port number file 12, aa is written as the port number of the administration target server 10 and cc is written as the port number of the administrated machine 30 as shown in FIG. 14A.

Described is a case where the port number of the administration server 10 is changed from aa to ee in the system A as shown in FIG. 14B.

The port number file administration function 12c rewrites the port number of the administration server of the port number file 11a from aa to ee based on the information inputted from outside via the input module 15.

When the content of the port number file 11a is updated by the above-described port number file administration function 12c, the application unit 12 sets the port number written in the content of the port number file 11a in the administration server 10 at an arbitrary timing, and changes the port number of the administration server 10 from aa to ee.

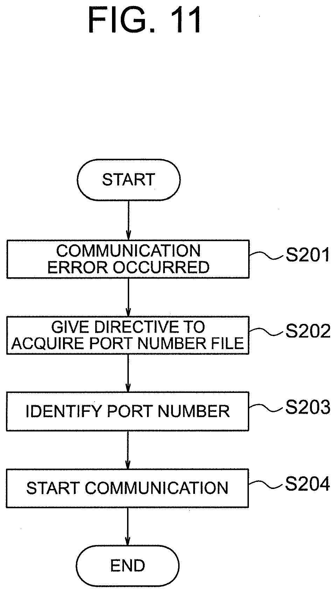

When the application 31 of the administrated machine 30 tries to communicate with the administrated machine 30 under such state, communication fails since the port number of the administration server 10 is different (FIG. 11: S201).

As shown in FIG. 14, the reason for failing the communication is that aa is written as the administration server port number and cc is written as the administrated machine port number information on the port number file 11a, and the port number used for the communication made from the administrated machine 30 to the administration target server 10 is set as aa.

When the communication fails, the port number identification module 32 directs the file acquisition module 31b to acquire the port number file, and the file acquisition module 31b upon receiving the command communicates with the file server unit 13 by using the well-known port 14b and requests the content of the port number file 11a stored in the administration server side storage module 11 (FIG. 11: S202).

When the port number file request accepting function 13b accepts the request for the port number file 11a from the file acquisition module 31b, the port number file reading function 13c reads the content of the port number file 11a stored in the administration server side storage module 11, and the port number file transmission function 13a transmits the content read by the port number file reading function 13c to the transmitter that has transmitted the request for the port number file 11a via the well-known port 14b.

Thereby, the content of the port number file 11a is transmitted to the administrated machine 30 from the administration server 10, so that the administrated machine 30 can grasp the port number of the administration server 10.

When acquiring the content of the port number file 11a from the administration server 10 via the well-known port 14b, the file acquisition module 31b generates the port number file 33a as a file of the same content as that of the port number file 11a, and stores the generated port number file 33a in the administrated machine side storage module 33 (FIG. 11: S203).

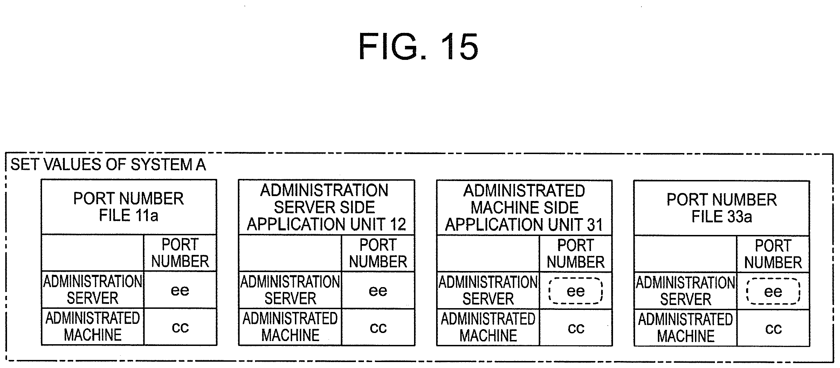

As shown in FIG. 15, ee is written as the administration server port number information and cc is written as the administrated machine port number information on the port number file 33a. The port number is set based on the port number file to communicate with the administration server (FIG. 11: S204).

Thereby, the agent side deployment function 31a can achieve the deployment function by communicating with the manager side deployment function 12a by having the multi-purpose port 14a identified by the port number identification module 32 as the connection destination.

Note here that it is possible to employ a structure with which execution contents of each of the steps such as the manager side deployment step, the port number file request accepting step, the port number file reading step, and the port number file transmitting step regarding the action contents of the embodiment described above are put into a program to have it functionalized by a computer that is provided in advance to the administration server 10.

Further, it is also possible to employ a structure with which execution contents of each of the steps such as the agent side deployment step, the port number file verification step, the port number file request step, the port number file acquisition step, and the port number file setting step regarding the action contents of the embodiment described above are put into a program to have it functionalized by a computer that is provided in advance to the administrated machine 30.

In such case, the program may be recorded on a non-transitory recording medium such as a DVD, a CD, a flash memory, or the like. In that case, the program is read out from the recording medium and executed by the computer.

Further, while the processing actions of the administrated machine 30 among the administrated machines 30 to 50 and the administration server 10 are described above in the embodiment, the administrated machines 40 and 50 also operate in the same manner as that of the administrated machine 30. Therefore, same effects can be acquired with those.

### (Effects of Embodiment)

As described above, it becomes possible to acquire the content of the port number file 11 and acquire the port number of the administration server 10 even when the port number of the communication port 14a of the administration server 10 is unknown through the following actions: the port number file verification function 32a verifies whether or not the port number file 33a exists in the administrated machine side storage module 33 and judges that the port number file 33a does not exist or judges that the port number file 33a exists but the connection judgment function 32b judges that it is not possible to connect to the port number of the administration server 10 recorded on the port number file 33a, the port number file acquisition directive function 32c directs the file acquisition module 31b to acquire the port number file 11a; the file acquisition module 31b upon receiving the directive requests the port number file 11a to the administration server 10 via the well-known port 14b; the port number file request accepting function 13b accepts the request; the port number file reading function 13c reads the content of the port number file 11a from the administration server side storage module 11; the port number file transmission function 13a transmits the content read out by the port number file reading function 13c to the administered machine 30; the file acquisition module 31b generates a file of the same content as that of the port number file 11a transmitted from the administration server 10 as the port number file 33a and stores it to the administrated machine side storage module 33; the port number identification function 32d identifies the port number of the administration server 10 based on the content of the port umber file 33a; and the application unit 31 sets the identified port number as the connection destination of the administration server 10.

This Application claims the Priority right based on Japanese Patent Application No. 2011-095780 filed on April 22, 2011.

### INDUSTRIAL APPLICABILITY

The present invention can be applied to a deployment system constituted with an administration server which distributes a disk image of an OS and an administrated machine which executes deployment based on the OS image distributed from the administration server.

### REFERENCE NUMERALS

- 10: Administration server
- 11: Administration server side storage module
- 11a: Port number file
- 12: Application unit
- 12a: Manager side deployment function
- 13: File server unit
- 13a: File transmission function
- 13b: File request accepting function
- 13c: File reading function
- 14a: Multi-purpose port
- 14b: Exclusive port (Well-known port)
- 30: Administrated machine
- 31: Application unit
- 31a: Agent side deployment function
- 31b: File acquisition unit
- 32: Port number identification module
- 32a: Port number file verification function
- 32b: Connection judgment function
- 32c: Port number file acquisition directive function
- 32d: Port number identification function
- 33: Administrated machine side storage function
- 33a: Port number file

## Claims

1. A port number identification system, comprising: an administration server (10) which includes an exclusive port (14b) that is a well-known port used for transmitting and receiving a file and a plurality of multi-purpose ports (14a), other than the well-known port, with different port numbers and individually accepts connection from outside via each of the multi-purpose ports; and a plurality of administrated machines (30) which perform communication by designating one of the multi-purpose ports as a connection destination, wherein
the administration server comprises:
administration server side storage module (11) for storing a port number file containing a port number of a first multi-purpose port; and
file server means (13) for taking out the port number file from the administration server side storage module in response to a request for the port number file made from the administrated machine via the exclusive port, and transmitting the port number file to the administrated machine via the exclusive port, wherein
each of the administrated machines comprises:
file acquisition means (31b) for requesting the port number file from the administration server via the exclusive port and acquiring the port number file transmitted via the exclusive port; and
port number identification means (32) for judging whether or not a connection via a second multi-purpose port can be done, directing the file acquisition means to acquire the port number file when it is judged that the connection via the second multi-purpose port cannot be done, identifying the port number of the first multi-purpose port based on the port number file acquired by the file acquisition means via the exclusive port, and using the port number of the first multi-purpose port as a connection destination to the administration server.

2. The port number identification system as claimed in claim 1, wherein:
the administrated machine (30) comprises administrated machine side storage means (33) for storing the port number file acquired via the exclusive port (14b);
the port number identification means (32) includes a port number file verification function (32a) for verifying whether or not the port number file is stored in the administrated machine side storage means; and
the port number identification means is adapted to direct to acquire the port number file, upon verifying that the port number file is not stored in the administrated machine side storage means.

3. A port number identification system control method used in a port number identification system comprising an administration server (10) which includes an exclusive port (14b) that is a well-known port used for transmitting and receiving a file and a plurality of multi-purpose ports (14a), other than the well-known port, with different port numbers and individually accepts connection from outside via each of the multi-purpose ports, and a plurality of administrated machines (30) which perform communication by designating one of the multi-purpose ports as a connection destination, wherein:
the administration server executes: a step of storing a port number file containing a port number of a first multi-purpose port into an administration server side storage module (11); and a step of taking out the port number file from the administration server side storage module in response to a request for the port number file made from the administrated machine via the exclusive port, and transmitting the port number file to the administrated machine via the exclusive port, wherein:
each of the administrated machines executes: a step of judging whether or not a connection via a second multi-purpose port can be done, requesting the port number file from the administration server via the exclusive port and acquiring the port number file transmitted via the exclusive port when it is judged that the connection via the second multi-purpose port cannot be done, identifying the port number of the first multi-purpose port based on the port number file acquired via the exclusive port, and using the port number of the first multi-purpose port as a connection destination to the administration server.

4. A port number identification system control program used in a port number identification system comprising an administration server (10) which includes an exclusive port (14b) that is a well-known port used for transmitting and receiving a file and a plurality of multi-purpose ports (14a), other than the well-known port, with different port numbers and individually accepts connection from outside via each of the multi-purpose ports, and a plurality of administrated machines (30) each of which includes a computer and performs communication by designating one of the multi-purpose ports as a connection destination,
wherein the administration server comprises
administration server side storage module (11) for storing a port number file containing a port number of a first multi-purpose port; and
file server means (13) for taking out the port number file from the administration server side storage module in response to a request for the port number file made from the administrated machine via the exclusive port and transmitting the port number file to the administrated machine via the exclusive port,
the port number identification system control program, when being executed by said computer, causes the computer to request the port number file from the administration server via the exclusive port and to acquire the port number file transmitted via the exclusive port; and to judge whether or not a connection via a second multi-purpose port can be done, to acquire the port number file when it is judged that the connection via the second multi-purpose port cannot be done, to identify the port number of the first multi-purpose port based on the port number file acquired via the exclusive port, and to use the port number of the first multi-purpose port as a connection destination to the administration server.

## Patentansprüche

1. Anschlussnummern-Identifikationssystem, das aufweist: einen Verwaltungsserver (10), der einen exklusiven Anschluss (14b), der ein wohlbekannter Anschluss ist, der verwendet wird, um eine Datei zu übertragen und zu empfangen, und mehrere Mehrzweckanschlüsse (14a) außer dem wohlgekannten Anschluss, mit unterschiedlichen Anschlussnummern umfasst und die Verbindung von außen über jeden der Mehrzweckanschlüsse akzeptiert; und mehrere verwaltete Vorrichtungen (30), welche die Kommunikation durchführen, indem sie einen der Mehrzweckanschlüsse als ein Verbindungsziel bezeichnen, wobei
der Verwaltungsserver aufweist:
ein verwaltungsserverseitiges Speichermodul (11) zum Speichern einer Anschlussnummerndatei, die eine Anschlussnummer eines ersten Mehrzweckanschlusses enthält; und
eine Dateiservereinrichtung (13), welche die Anschlussnummerndatei ansprechend auf eine Anforderung der Anschlussnummerndatei, die von der verwalteten Vorrichtung über den exklusiven Anschluss gestellt wird, von dem verwaltungsserverseitigen Speichermodul herausnimmt und die Anschlussnummerndatei über den exklusiven Anschluss an die verwaltete Vorrichtung überträgt, wobei
jede der verwalteten Vorrichtungen aufweist:
eine Dateierlangungseinrichtung (31b) zum Anfordern der Anschlussnummerndatei über den exklusiven Anschluss von dem Verwaltungsserver und Erlangen der über den exklusiven Anschluss übertragenen Anschlussnummerndatei; und
eine Anschlussnummern-Identifikationseinrichtung (32) zur Beurteilung, ob eine Verbindung über einen zweiten Mehrzweckanschluss erledigt werden kann oder nicht, Steuern der Dateierlangungseinrichtung, um die Anschlussnummerndatei zu erlangen, wenn beurteilt wird, dass die Verbindung über den zweiten Mehrzweckanschluss nicht erledigt werden kann, Identifizieren der Anschlussnummer des ersten Mehrzweckanschlusses basierend auf der Anschlussnummerndatei, die von der Dateierlangungseinrichtung über den exklusiven Anschluss erlangt wird, und Verwenden der Anschlussnummer des ersten Mehrzweckanschlusses als ein Verbindungsziel zu dem Verwaltungsserver.

2. Anschlussnummern-Identifikationssystem nach Anspruch 1, wobei:
die verwaltete Vorrichtung (30) eine Speichereinrichtung (33) auf der Seite der verwalteten Vorrichtung aufweist, um die über den exklusiven Anschluss (14b) erlangte Anschlussnummerndatei zu speichern;
die Anschlussnummern-Identifikationseinrichtung (32) eine Anschlussnummerndatei-Verifizierungsfunktion (32a) umfasst, um zu verifizieren, ob die Anschlussnummerndatei in der Speichereinrichtung (33) auf Seite der verwalteten Vorrichtung gespeichert ist oder nicht; und
die Anschlussnummern-Identifikationseinrichtung geeignet ist, um nach der Verifizierung, dass die Anschlussnummerndatei nicht in der Speichereinrichtung (33) auf Seite der verwalteten Vorrichtung gespeichert sind, die Erlangung der Anschlussnummerndatei zu steuern.

3. Verfahren zur Steuerung eines Anschlussnummern-Identifikationssystems, das in einem Anschlussnummern-Identifikationssystem verwendet wird, das einen Verwaltungsserver (10), der einen exklusiven Anschluss (14b), der ein wohlbekannter Anschluss ist, der verwendet wird, um eine Datei zu übertragen und zu empfangen, und mehrere Mehrzweckanschlüsse (14a) außer dem wohlgekannten Anschluss, mit unterschiedlichen Anschlussnummern umfasst und die Verbindung von außen über jeden der Mehrzweckanschlüsse akzeptiert; und mehrere verwaltete Vorrichtungen (30) aufweist, welche die Kommunikation durchführen, indem sie einen der Mehrzweckanschlüsse als ein Verbindungsziel bezeichnen, wobei
der Verwaltungsserver ausführt: einen Schritt zum Speichern einer Anschlussnummerndatei, die eine Anschlussnummer eines ersten Mehrzweckanschlusses enthält, in ein verwaltungsserverseitiges Speichermodul (11); und einen Schritt, um die Anschlussnummerndatei ansprechend auf eine Anforderung der Anschlussnummerndatei, die von der verwalteten Vorrichtung über den exklusiven Anschluss gestellt wird, von dem verwaltungsserverseitigen Speichermodul herauszunehmen und die Anschlussnummerndatei über den exklusiven Anschluss an die verwaltete Vorrichtung zu übertragen, wobei
jede der verwalteten Vorrichtungen ausführt: einen Schritt zur Beurteilung, ob eine Verbindung über einen zweiten Mehrzweckanschluss erledigt werden kann oder nicht, Anfordern der Anschlussnummerndatei von dem Verwaltungsserver über den exklusiven Anschluss und Erlangen der Anschlussnummer, die über den exklusiven Anschluss übertragen wird, wenn beurteilt wird, dass die Verbindung über den zweiten Mehrzweckanschluss nicht erledigt werden kann, Identifizieren der Anschlussnummer des ersten Mehrzweckanschlusses basierend auf der Anschlussnummerndatei, die über den exklusiven Anschluss erlangt wird, und Verwenden der Anschlussnummer des ersten Mehrzweckanschlusses als ein Verbindungsziel zu dem Verwaltungsserver.

4. Steuerprogramm für Anschlussnummern-Identifikationssystem, das in einem Anschlussnummern-Identifikationssystem verwendet wird, das aufweist: einen Verwaltungsserver (10), der einen exklusiven Anschluss (14b), der ein wohlbekannter Anschluss ist, der verwendet wird, um eine Datei zu übertragen und zu empfangen, und mehrere Mehrzweckanschlüsse (14a) außer dem wohlgekannten Anschluss, mit unterschiedlichen Anschlussnummern umfasst und die Verbindung von außen über jeden der Mehrzweckanschlüsse akzeptiert; und mehrere verwaltete Vorrichtungen (30), von denen jede einen Computer umfasst und die Kommunikation durchführt, indem sie einen der Mehrzweckanschlüsse als ein Verbindungsziel bezeichnet,
wobei der Verwaltungsserver aufweist:
ein verwaltungsserverseitiges Speichermodul (11) zum Speichern einer Anschlussnummerndatei, die eine Anschlussnummer eines ersten Mehrzweckanschlusses enthält; und
eine Dateiservereinrichtung (13), welche die Anschlussnummerndatei ansprechend auf eine Anforderung der Anschlussnummerndatei, die von der verwalteten Vorrichtung über den exklusiven Anschluss gestellt wird, von dem verwaltungsserverseitigen Speichermodul herausnimmt und die Anschlussnummerndatei über den exklusiven Anschluss an die verwaltete Vorrichtung überträgt,
wobei das Steuerprogramm für das Anschlussnummern-Identifikationssystem, wenn es durch den Computer ausgeführt wird, bewirkt, dass der Computer die Anschlussnummerndatei über den exklusiven Anschluss von dem Verwaltungsserver anfordert und die über den exklusiven Anschluss übertragene Anschlussnummerndatei erlangt; und
beurteilt, ob eine Verbindung über einen zweiten Mehrzweckanschluss erledigt werden kann oder nicht, um die Anschlussnummerndatei zu erlangen, wenn beurteilt wird, dass die Verbindung über den zweiten Mehrzweckanschluss nicht erledigt werden kann, um die Anschlussnummer des ersten Mehrzweckanschlusses basierend auf der Anschlussnummerndatei, die über den exklusiven Anschluss erlangt wird, zu erlangen und die Anschlussnummer des ersten Mehrzweckanschlusses als ein Verbindungsziel zu dem Verwaltungsserver zu verwenden.

## Revendications

1. Système d'identification de numéro de port, comprenant : un serveur d'administration (10) qui comporte un port exclusif (14b), qui est un port bien connu utilisé pour transmettre et recevoir un fichier, et une pluralité de ports polyvalents (14a) autres que le port bien connu, avec différents numéros de ports, et qui accepte individuellement la connexion depuis l'extérieur via chacun des ports polyvalents ; et une pluralité de machines administrées (30) qui établissent une communication en désignant l'un des ports polyvalents comme destination de connexion, dans lequel
le serveur d'administration comprend :
un module de stockage secondaire de serveur d'administration (11) pour stocker un fichier de numéro de port contenant un numéro de port d'un premier port polyvalent ;
et
un moyen de serveur de fichier (13) pour extraire le fichier de numéro de port du module de stockage secondaire de serveur d'administration en réponse à une demande du fichier de numéro de port faite à partir de la machine administrée via le port exclusif, et pour transmettre le fichier de numéro de port à la machine administrée via le port exclusif, dans lequel
chacune des machines administrées comprend :
un moyen d'acquisition de fichiers (31b) pour demander le fichier de numéro de port à partir du serveur d'administration via le port exclusif et pour acquérir le fichier de numéro de port transmis via le port exclusif ; et
un moyen d'identification de numéro de port (32) pour estimer si une connexion via un second port polyvalent peut être faite ou non, pour ordonner au moyen d'acquisition de fichiers d'acquérir le fichier de numéro de port lorsqu'il est estimé que la connexion via le second port polyvalent ne peut pas être faite, pour identifier le numéro de port du premier port polyvalent sur la base du fichier de numéro de port acquis par le moyen d'acquisition de fichiers via le port exclusif, et pour utiliser le numéro de port du premier port polyvalent comme destination de connexion au serveur d'administration.

2. Système d'identification de numéro de port selon la revendication 1, dans lequel :
la machine administrée (30) comprend un moyen de stockage secondaire de machine administrée (33) pour stocker le fichier de numéro de port acquis via le port exclusif (14b) ;
le moyen d'identification de numéro de port (32) comporte une fonction de vérification de fichier de numéro de port (32a) pour vérifier si le fichier de numéro de port est stocké ou non dans le moyen de stockage secondaire de machine administrée ; et
le moyen d'identification de numéro de port est adapté pour ordonner l'acquisition du fichier de numéro de port, après avoir vérifié que le fichier de numéro de port n'est pas stocké dans le moyen de stockage secondaire de machine administrée.

3. Procédé de commande de système d'identification de numéro de port utilisé dans un système d'identification de numéro de port, comprenant un serveur d'administration (10) qui comporte un port exclusif (14b), qui est un port bien connu utilisé pour transmettre et recevoir un fichier, et une pluralité de ports polyvalents (14a) autres que le port bien connu, avec différents numéros de ports, et qui accepte individuellement la connexion depuis l'extérieur via chacun des ports polyvalents, et une pluralité de machines administrées (30) qui établissent une communication en désignant l'un des ports polyvalents comme destination de connexion, dans lequel
le serveur d'administration exécute : une étape consistant à stocker un fichier de numéro de port contenant un numéro de port d'un premier port polyvalent dans un module de stockage secondaire de serveur d'administration (11) ; et une étape consistant à extraire le fichier de numéro de port du module de stockage secondaire de serveur d'administration en réponse à une demande du fichier de numéro de port faite à partir de la machine administrée via le port exclusif, et à transmettre le fichier de numéro de port à la machine administrée via le port exclusif, dans lequel :
chacune des machines administrées exécute : une étape consistant à estimer si une connexion via un second port polyvalent peut être faite ou non, à demander le fichier de numéro de port à partir du serveur d'administration via le port exclusif et à acquérir le fichier de numéro de port transmis via le port exclusif lorsqu'il est estimé que la connexion via le second port polyvalent ne peut pas être faite, à identifier le numéro de port du premier port polyvalent sur la base du fichier de numéro de port acquis via le port exclusif, et à utiliser le numéro de port du premier port polyvalent comme destination de connexion au serveur d'administration.

4. Programme de commande de système d'identification de numéro de port utilisé dans un système d'identification de numéro de port comprenant un serveur d'administration (10) qui comporte un port exclusif (14b), qui est un port bien connu utilisé pour transmettre et recevoir un fichier, et une pluralité de ports polyvalents (14a) autres que le port bien connu, avec différents numéros de ports, et qui accepte individuellement la connexion de l'extérieur via chacun des ports polyvalents, et une pluralité de machines administrées (30) dont chacune comporte un ordinateur et établit une communication en désignant l'un des ports polyvalents comme destination de connexion,
dans lequel le serveur d'administration comprend
un module de stockage secondaire de serveur d'administration (11) pour stocker un fichier de numéro de port contenant un numéro de port d'un premier port polyvalent ;
et
un moyen de serveur de fichier (13) pour extraire le fichier de numéro de port du module de stockage secondaire de serveur d'administration en réponse à une demande du fichier de numéro de port faite à partir de la machine administrée via le port exclusif, et pour transmettre le fichier de numéro de port à la machine administrée via le port exclusif,
le programme de commande de système d'identification de numéro de port, lorsqu'il est exécuté par ledit ordinateur, amène l'ordinateur à demander le fichier de numéro de port à partir du serveur d'administration via le port exclusif et à acquérir le fichier de numéro de port transmis via le port exclusif ; et
à estimer si une connexion via un second port polyvalent peut être faite ou non, à acquérir le fichier de numéro de port lorsqu'il est estimé que la connexion via le second port polyvalent ne peut pas être faite, à identifier le numéro de port du premier port polyvalent sur la base du fichier de numéro de port acquis via le port exclusif, et à utiliser le numéro de port du premier port polyvalent comme destination de connexion au serveur d'administration.
